# EUROPÄISCHE PATENTSCHRIFT

(11) **EP 1 023 325 B1**
(45) Veröffentlichungstag und Bekanntmachung des Hinweises auf die Patenterteilung: **16.04.2003**
(21) Anmeldenummer: 98947546.2
(22) Anmeldetag: 23.09.1998
(51) Int. Cl.: C08B 1/00, C08B 1/02, C08B 1/06, C08B 37/00

(54) **VERFAHREN ZUR AKTIVIERUNG VON POLYSACCHARIDEN**
METHOD FOR ACTIVATING POLYSACCHARIDES
PROCEDE POUR ACTIVER DES POLYSACCHARIDES

(30) Priorität: 26.09.1997 DE 19742692
(43) Veröffentlichungstag der Anmeldung: 02.08.2000
(73) Patentinhaber: Karstens, Ties, Dr., 79268 Bötzingen (DE)
(72) Erfinder: KARSTENS, Ties, D-79268 Bötzingen (DE); STEIN, Armin, D-79341 Kenzingen (DE)
(74) Vertreter: Hagemann, Heinrich, Dr.rer.nat., Dipl.-Chem.
(86) Internationale Anmeldenummer: EP9806072
(87) Internationale Veröffentlichungsnummer: WO99016793

(56) Entgegenhaltungen:
- EP-A- 0 077 287
- DE-A- 19 611 416
- DE-A- 19 628 277
- DE-C- 4 329 937
- US-A- 5 037 663
- DATABASE WPI Week 6800, Derwent Publications Ltd., London, GB; AN 68-60955P, XP002089351 & IE 660 340 A (DEERING MILLIKEN RES CORP) & NL 6 604 641 A (DEERING MILLIKEN RES CORP) 10. Oktober 1966

## Beschreibung

Die Erfindung betrifft ein Verfahren zur Aktivierung von Polysacchariden durch Behandlung mit flüssigem Ammoniak.

Die Aktivierung von Polysacchariden mit flüssigem Ammoniak führt zu einem gequollenen, gut zugänglichen Netzwerk, in dem sich die Ammoniakmoleküle dank ihrer hohen Basizität nicht nur in der amorphen, sondern auch in der kristallinen Phase zwischen die Hydroxylgruppen schieben und somit die Wasserstoffbrückenbindungen unterbrechen. Mit Ammoniak behandelte Cellulose wird als Ammoniakcellulose bezeichnet und weist erheblich größere Netzebenenabstände als unbehandelte Cellulose auf. Auch nach dem Entfernen des Ammoniaks sind die Netzebenenabstände größer als in unbehandelter Cellulose.

Es wurden im Stand der Technik bereits verschieden Verfahren zur Aktivierung von Polysacchariden mittels flüssigem Ammoniak beschrieben:

Ein Verfahren zur Ammoniakaktivierung von Cellulose ist z.B. aus der DE 43 29 937 C1 bekannt. Dort ist ein Verfahren zur Behandlung von Cellulose durch Inkontaktbringen der Cellulose mit flüssigem Ammoniak bei gegenüber Atmosphärendruck erhöhtem Druck in einem Druckgefäß und anschließende Entspannung durch rasche Reduzierung des Drucks auf Atmosphärendruck beschrieben. Die schlagartige Entspannung wird so durchgeführt, daß ausschließlich Ammoniak entweicht. Die Reaktionsmischung Cellulose/flüssiger Ammoniak verbleibt im ursprünglichen Reaktionsgefäß und verläßt dieses bei der Explosion nicht. Das nach der Entspannung im Druckgefäß verbliebene Ammoniak wird bis auf einen Minimalgehalt von 2 bis 4 Masse-%, der zur Erhaltung des durch die Einwirkung des Ammoniaks erreichten Aktivierungszustandes erforderlich ist, wieder entfernt. Das für die Aulrechterhaltung des Aktivierungszustandes notwendige restliche Ammoniak wird schließlich unter Einwirkung von überhitztem Wasserdampf durch Wasser als Quell- und Inklusionsmittel ersetzt, d.h., es ist demnach eine zusätzliche Nachbehandlung zur Aufrechterhaltung der Aktivierung erforderlich.

Die EP-A-0 057 105 A2 betrifft ein Verfahren zur Herstellung eines alkalilöslichen Cellulosederivats durch Behandlung der Cellulose mit einer flüssigen Ammoniaklösung von Harnstoff bei einer Temperatur unterhalb der Reaktionstemperatur zwischen Cellulose und Harnstoff. Das Ammoniak wird bei einer Temperatur unterhalb der Reaktionstemperatur von Cellulose und Harnstoff durch Abdampfen im Vakuum oder Erhitzen entfernt, wodurch man eine Cellulose erhält, die den Harnstoff in fein verteilter Form aufweist. Schließlich wird die so erhaltene Cellulose mit dem darin feinverteilten Harnstoff durch Erhitzen zu Cellulosecarbamat umgesetzt. Nachteilig ist hierbei, daß das Inkontaktbringen mit flüssigem Ammoniak bevorzugt bei relativ tiefen Temperaturen durchgeführt wird (T ≤ -33°C), wodurch die Löslichkeit des Harnstoffs in flüssigem Ammoniak gering und dadurch ein hohes NH₃/Cellulose-Verhältnis notwendig ist. Ferner erfordern die tiefen Temperaturen eine erhebliche Einwirkdauer von bis zu etwa 6 Stunden.

Nach der US-PS-2 290 888 aus dem Jahr 1932 wird eine Aktivierung von Kohlenhydraten durch Behandlung dieser mit einem in flüssigem Ammoniak gelösten Ammoniumsalz erhalten. Es werden zwar einige weitere Zusatzstoffe zu Ammoniak aufgeführt, deren Einsatzzweck wird aber nicht erläutert. Beansprucht werden lediglich organische und anorganische Ammoniumsalze als Zusatzstoffe, gelöst in flüssigem, wasserfreiem Ammoniak. Das Ammoniak wird durch Verdampfen, Abpressen, verminderten Druck, Hitzeeinwirkung etc., oder jegliche Kombination hiervon entfernt. Nachteilig ist neben der großen Menge an Ammoniak, der die Cellulose vollständig bedecken muß, die lange Behandlungszeit. Bei der beschriebenen Entfernung des Ammoniaks tritt zudem ein Verlust des Aktivierungszustandes ein. Ferner besteht bei Zusatz der genannten Stoffe die Gefahr der Migration dieser gelösten Stoffe (inhomogene Verteilung, Konzentrationsgradient etc.).

Bei einem neueren Verfahren nach der WO 96/30411 wird Cellulose mit flüssigem Ammoniak bei einem gegenüber Atmosphärendruck erhöhten Ausgangsdruck und einer Temperatur von mindestens etwa 25°C in Kontakt gebracht und anschließend entspannt, wobei das dem System Cellulose/flüssiges Ammoniak zur Verfügung stehende Volumen unter Senken des Druck um mindestens 5 bar explosionsartig vergrößert wird. Bei dieser Verfahrensführung wird ein Verfahrensprodukt erhalten, dessen Restammoniakgehalt unter Erhalt der Aktivität auf weniger als 0,2 Masse-% gesenkt werden kann. Ein ähnliches Verfahren beschreibt das ältere Recht DE 196 28 277 A1, wonach ein zur Herstellung von Carbamat bestimmtes Gemisch aus Cellulose und Harnstoff als Ausgangsgemisch dient und wie in der WO 96/30411 aktiviert wird.

Bei den bekannten Verfahren ist ein bestimmter Gehalt an Restammoniak im aktivierten Zellstoff für die Aufrechterhaltung der Quellung, der Zugänglichkeit und der Reaktivität von Bedeutung. Im Falle der einfachen Ammoniakentspannung darf der Restammoniakgehalt 4 Masse-% nicht unterschreiten, ohne daß die Reaktivität beeinträchtigt würde. Die Menge von 0,2 Masse-% an Restammoniak ist als untere Grenze für die Aufrechterhaltung der Reaktivität eines Produktes, wie es nach der Ammoniakexplosion vorliegt, zu betrachten.

Die genannten Werte gelten jedoch nur für den Fall, daß der ammoniakbehandelte Zellstoff unter atmosphärischen Bedingungen längere Zeit gelagert wurde, so daß das Ammoniak langsam aus dem Zellstoff entweichen kann. Für den Erhalt des Aktivierungszustandes ist nämlich nicht nur der absolute Restammoniakgehalt wichtig, sondern auch die Geschwindigkeit der Ammoniakentfernung. Während noch ammoniakhaltige Proben nach dem Austausch des Ammoniaks gegen Wasser und nach Austausch des Wassers gegen Eisessig eine hervorragende Acetylierbarkeit aufweisen, reagieren scharf getrocknete Proben nahezu überhaupt nicht. Dies ist vermutlich auf das Kollabieren der interfibrillären Kapillarsysteme infolge raschen und vollständigen Entfernens von Ammoniak und Wasser durch Ausheizen (im Vakuum) zurückzufiihren. Bemerkenswert ist, daß Röntgenbeugungsspektren, die bekanntlich nur eine Charakterisierung der kristallinen Phasen gestatten, keine Unterschiede zwischen noch schwach ammoniakhaltigen und im Vakuum bei hoher Temperatur behandelten Proben erkennen lassen. Eine ähnliche Erscheinung ist bei unbehandeltem Zellstoff, d.h. Zellstoff in seiner natürlichen Modifikation, bekannt. Auch hier führt scharfes Trocknen oder starkes Quetschen beim Zerkleinern zu stark verringerter Zugänglichkeit und damit zum Verschwinden der Reaktivität. Diese Erscheinung ist als Verhornung bekannt und wird genauso interpretiert wie zuvor geschildert.

Die Einhaltung eines definierten, homogen verteilten Ammoniakrestgehaltes ist nur schwer sicherzustellen. An verschiedenen Chargen oder bei unterschiedlich langer Lagerzeit sind unterschiedlich hohe Restammoniakgehalte zu erwarten. Man hat es also bei ammoniakaktivierten Polysacchariden nicht mit Produkten bekannter und konstanter Zusammensetzung zu tun. Vor der Weiterverarbeitung ist daher in jedem Fall eine analytische Charakterisierung erforderlich.

Für die Lagerung und den Transport eines Zellstoff kann sein Restammoniakgehalt ein Sicherheits- und Umweltproblem darstellen. Die Geruchsschwelle liegt bei Ammoniak bei 5 ppm, der MAK-Wert bei 50 ppm, die Belästigungsschwelle bei 250 ppm und die Erträglichkeitsgrenze bei 500 bis 1000 ppm.

Auch bei der Herstellung von Derivaten aus ammoniakaktivierten Polysacchariden kann ein Restammoniakgehalt nachteilig sein. Dies ist der Fall, wenn die eingesetzten Reagenzien selbst vollständig mit dem Ammoniak reagieren, wenn die eingesetzten Reagenzien in erheblichem Umfang mit dem Ammoniak reagieren oder wenn infolge des Restammoniaks sich eine vom angestrebten Muster abweichende Substituentenverteilung einstellt. So wird bei saurer Katalyse, etwa bei der Acetylierung von Cellulose, der Katalysator teilneutralisiert und die sich bildenden Salze führen zu Puffersystemen. Aus Epoxiden und halogenierten Alkylverbindungen bilden sich Nebenprodukte, die bei der Alkylierung nicht mehr reaktiv sind.

Der nachträgliche Ersatz des Restammoniaks durch sequentiellen Lösemittel- bzw. Quellmittelaustausch ohne Beeinträchtigung der Aktivierung des Polysaccharids (sogenannte Inklusion) stellt einen aufwendigen und streng zu kontrollierenden Verfahrensschritt dar. Der Austausch kann in einem Lösemittelaustausch (z.B. bei der Acetylierung durch die Folge Ammoniak/Wasser/Eisessig) oder dem vorsichtigen Austreiben des Ammoniaks aus der Reaktionsmischung (z.B. bei der Herstellung von Carboxymethylcellulose) bestehen. Für einen industriellen Prozeß ist er wegen der hohen Flottenverhältnisse, der Einsatzmengen und des gegebenenfalls erforderlichen Recyclings der Lösemittel zu aufwendig.

Der Erfindung lag daher die Aufgabe zugrunde, ein Verfahren zur Aktivierung von Polysacchariden mit flüssigem Ammoniak bereitzustellen, dessen Verfahrensprodukt einen hohen Aktivierungsgrad, eine hohe Zugänglichkeit für Reagenzien und hohe Reaktivität über längere Zeit beibehält, ohne daß ein bei folgenden Verwendungen störender Restammoniakgehalt oder ohne daß ein aufwendiger Prozeß des nachträglichen Lösungsmittelaustausches oder der Verdrängung erforderlich ist. Es soll damit die kostengünstige Herstellung von hochreaktiven Polysacchariden bzw. Zellstoffen (instant pulps) ermöglicht werden, die bei der Weiterverarbeitung ohne weitere Maßnahmen sofort Derivatisierungsreaktionen unterzogen werden können. Für einen etwaigen Transport sollen diese Polysaccharide bzw. Zellstoffe trotz der hierbei erforderlichen Trocknung ihre Reaktivität beibehalten.

Erfindungsgemäß wird diese Aufgabe durch ein Verfahren zur Aktivierung eines Polysaccharids durch Inkontaktbringen des Polysaccharids mit flüssigem Ammoniak gelöst, bei dem das Polysaccharid in Gegenwart eines in flüssigem Ammoniak löslichen oder dispergierbaren Inklusionsmittels mit dem flüssigen Ammoniak in Kontakt gebracht und das dem System Polysaccharid/Inklusionsmittel/flüssiges Ammoniak zur Verfügung stehende Volumen unter Senken des Drucks um mindestens 5 bar explosionsartig vergrößert wird, mit der Maßgabe daß das Inklusionsmittel nicht Harnstoff sein kann, wenn das Polysaccharid Cellulose ist.

Durch die Gegenwart von in flüssigem Ammoniak löslichen oder dispergierbaren Inklusionsmitteln wird die quellende Wirkung des flüssigen Ammoniaks unterstützt. Es findet eine Verteilung des im flüssigen Ammoniak gelösten oder dispergierten Inklusionsmittels im so behandelten Polysaccharid statt. Die Fähigkeit des Ammoniaks, die Wasserstoffbrückenbindungen zu unterbrechen, hat zur Folge, daß sich flüssiges Ammoniak rasch und gleichmäßig sowohl in der amorphen wie in der kristallinen Phase von Polysacchariden verteilt. Im flüssigen Ammoniak gelöste oder dispergierte Stoffe werden hierbei mitgeführt. Das flüssige Ammoniak dient demnach als Vektor zur gleichmäßigen Verteilung des Inklusionsmittels. Eine nachfolgende rasche Entfernung des Ammoniaks durch explosionsartige Vergrößerung des zur Verfügung stehenden Volumens unter Senken des Druckes um mindestens 5 bar, "friert" die gleichmäßige Verteilung der mit dem Ammoniak zugeführten Inklusionsmittel ein. Der durch den Ammoniak hervorgerufene Quellungszustand bleibt nach dessen weitgehender oder vollständiger Entfernung erhalten, weil die mit dem Ammoniak zugeführten Substanzen als Platzhalter zwischen den Polysaccharidketten wirken und auf diese Weise eine Änderung der infolge der Ammoniak-Einwirkung hervorgerufenen supramolekularen Struktur, insbesondere hinsichtlich Kapillarsystem, Porengröße und Kristallitgröße, verhindern. Sie behindern infolge der "Spreizung" der Molekülketten den Wiederaufbau eines Wasserstoffbrückensystems und verhindern eine Schrumpfung des Polysaccharids.

Inklusionsmittel im vorliegend verwendeten Sinn sind in flüssigem Ammoniak lösliche oder dispergierbare Verbindungen, die geeignet sind, unter Einwirkung von flüssigem Ammoniak als Vehikel zwischen die Molekülketten in die kristallinen und amorphen Bereiche des Polysaccharids zu dringen. "Löslich oder dispergierbar" bedeutet, daß das Inklusionsmittel mit flüssigem Ammoniak eine einheitliche Phase bildet, in der es entweder in molekular gelöster oder kolloidal dispergierter Form vorliegt. Die Inklusionsmittel lassen sich einteilen in Verbindungen, die für eine Reaktion mit den polysaccharidischen OH-Gruppen ungeeignet sind, und Verbindungen, die für eine Reaktion mit den polysaccharidischen OH-Gruppen geeignet sind.

Eine Auswahl in flüssigem Ammoniak sehr gut löslichen und ammonolysestabilen Substanzen findet sich in: Chemistry in Anhydrous Liquid Ammonia, Volume I, part 2, "Organic Reactions in Liquid Ammonia" by Herchel Smith, Interscience Publishers, A Divison of John Wiley&Sons, Inc., New York - London.

Vorzugsweise weist das Inklusionsmittel ein Molekulargewicht von etwa 60 bis 50 000 g/mol auf.

Geeignete Inklusionsmittel sind unter anderem einwertige Alkohole, wie Isopropanol, mehrwertige Alkohole, wie Erythrit, Pentaerythrit, ethoxyliertes Pentaerythrit, Mannit, Phenole, wie Phenol, Catechol, Resorcinol, Pyrogallol, Nitrophenole, Ether, wie Diamylether, Diphenylether, Ethylbenzylether, Diethoxydiphenylmethan, Keto-Enolether, Acetale, wie Dimetyl-, Diethyl-, Di-n-propyl, Di-n-butylacetal von Formaldehyd, Acetaldehyd, Benzaldehyd, Diethylpropional, Ketendiethylacetal, Ketone, wie Acetophenon, Benzophenon, Phenylbenzylketon, Phenylbenzhydrylylketon, Vanillin, β-Ketoester, wie Acetobernsteinsäureester, Carbonsäureamide, wie Phosphorsäureamide, Acetanilid, aromatische Amide, wie Benzamid, Acetanilid, Phenylacetamid, Sulfonsäureamide, wie Benzolsulfonamid, Imide, wie Phthalimid, Carbonsäureester (einschließlich Orthoester, wie Dioxan und Dioxolan, und Kohlensäureester), wie Ethylacetat, Isopropenylacetat, Ethylnonanoat, Ethylvalerat, Diethylbernsteinsäureester, Ethylcarbonat, Ethyl-ethylacrylat, Ethylbenzoat, Methylbenzoat, Ethylphthalat, Ethylsalicylat, Phenylethylbenzoat, Ethylorthocarbonat, Ethylorthoformiat, Ethylencarbonat, Propylencarbonat, Diethylencarbonat, Tetraethylcarbonat, Epoxide, wie Styrenoxid, Harnstoffderivate, wie Harnstoff, DMEU, Benzylharnstoff, Thioharnstoff, Biuret, Guanidylharnstoff, Ethylphenylharnstoff, Ethylcarbamat, Aminosäuren, wie Glycin, Alanin, Leucin, Sarcosin, Tyrosin, Asparagin, Kreatin, Steroide, wie Cholesterin, Mono-, Di- oder Oligosaccharide, wie Glucose, Fructose, Sucrose, Lactose, Maltose, heterocyclische Verbindungen, wie 4,4'-Dipyridyl, Pyrrol, Imidazol, Thiophen, Indol, Undecyloxazolin, Salze, wie anorganische Anmoniumsalze, Borate, Diethylsuccinate, Säuren, wie Phosphorsäuren, Phosphonsäuren oder auch Siloxane. Als Inklusionsmittel eignen sich ferner polare aprotische Lösungsmittel mit einem Siedepunkt bei Atmosphärendruck von mindestens 50°C, wie DMSO, DMAc, NMP, NMMO. Als Inklusionsmittel eignen sich ferner Tetraorganylammoniumverbindungen. Als Inklusionsmittel eignen sich ferner Polymere, wie Celluloseacetat, Cellulosenitrat, Celluloseether, PEG, Polyvinylpyrrolidon, Polyvinylalkohol und Polyethylenimin,

Der Begriff Inklusionsmittel soll außerdem reaktive Spacer umfassen. "Reaktive Spacer" sind Verbindungen, die unter Einbau sperriger Gruppen chemisch mit den polysaccharidischen OH-Gruppen reagieren können. Geeignet sind hierzu unter anderem Acrylnitril, Acrylamide, Acrylester, Harnstoff, Harnstoffderivate mit mindestens einer primären Aminogruppe, Hexamethyldisilazan, verkappte Isocyanate.

Alle Arten von Polysacchariden sind für die erfindungsgemäße Lehre geeignet, z.B. Stärke, Cellulose, Chitin und/oder Guargummi. Die Verwendung von Cellulose, vorzugsweise eines α-Cellulosegehalts von mindestens etwa 92 Masse-%, ist bevorzugt.

Der Wassergehalt der eingesetzten Polysaccharide liegt vorzugsweise unter etwa 12 Masse-%.

Nach dem erfindungsgemäßen Verfahren wird das dem System Polysaccharid/ Inklusionsmittel/flüssiges Ammoniak zur Verfügung stehende Volumen unter Senken des Drucks um mindestens 5 bar explosionsartig vergrößert. Der Begriff "explosionsartig" ist eng zu sehen. Vorzugsweise erfolgt die explosionsartige Volumenvergrößerung innerhalb einer Zeit von weniger als 1 s, insbesondere weniger als 0,5 s. Durch die explosionsartige Volumenvergrößerung findet eine schlagartige Verdampfung eines Großteils, insbesondere von mehr als 50%, besonders bevorzugt von mehr als 80%, der ursprünglich flüssig vorliegenden Ammoniakmenge statt. Dies führt zu einer besonders guten Fixierung der zuvor erfolgten gleichmäßigen Verteilung des Inklusionsmittels.

Das Polysaccharid, das Inklusionsmittel und das flüssige Ammoniak werden in einer Druckeinrichtung in Kontakt gebracht, und das System Polysaccharid/Inklusionsmittel/flüssiges Ammoniak wird durch Überführen in einen Explosionsraum mit gegenüber der Druckeinrichtung größerem Volumen entspannt. Vorzugsweise wird der Ausgangsdruck zwischen etwa 5 und 46 bar, insbesondere zwischen etwa 25 und 30 bar, eingestellt. Die Temperatur liegt vor der Reduzierung des Drucks vorzugsweise zwischen etwa 25 und 85 °C, insbesondere zwischen etwa 55 und 65 °C. Vorzugsweise wird der Ausgangsdruck explosionsartig um mindestens etwa 10 bar, insbesondere etwa 30 bar, gesenkt.

Zur Durchführung des erfindungsgemäßen Verfahrens wird der Polysaccharidrohstoff in geeigneter, gegebenenfalls zerkleinerter Form in ein Gefäß, vorzugsweise ein druckfestes Gefäß, überführt. Wahlweise wird ein Gemisch von Polysaccharid und Inklusionsmittel hergestellt und dieses mit flüssigem Ammoniak beaufschlagt oder das vorgelegte Polysaccharid wird mit einer Lösung oder Dispersion des Inklusionsmittels in flüssigem Ammoniak versetzt. Das druckfeste Gefäß kann ein Autoklav sein; es kann ein kontinuierlich arbeitender Apparat sein. Alle Apparate können mit einer externen Heizung ausgestattet sein.

Die Menge des flüssigen Ammoniaks soll im allgemeinen ausreichen, zumindest die Oberfläche des Polysaccharidausgangsmaterials zu benetzen. Es werden vorzugsweise auf 1 Masse-Teil Polysaccharid mindestens 1 Masse-Teil, insbesondere etwa 5 bis 10 Masse-Teile, flüssiges Ammoniak eingesetzt. Das molare Verhältnis von Inklusionsmittel zu Anhydroglucoseeinheiten des Polysaccharids beträgt vorzugsweise weniger als etwa 1:50, insbesondere etwa 1:20 bis 1:5.

Die Kontaktzeit zwischen Polysaccharid, Inklusionsmittel und flüssigem Ammoniak ist nicht kritisch. Als sinnvoller zeitlicher Rahmen kann etwa 1 s bis 60 min angegeben werden. Das Unterschreiten einer Kontaktzeit von 1 s ist aus praktischen Gründen kaum verwirklichbar. Eine Behandlung von länger als etwa 60 min bringt meist keinen weitergehenden technischen Vorteil. Kontaktzeiten im Bereich von 10 s bis 1 min sind im allgemeinen bevorzugt.

Vorzugsweise wird das Polysaccharid bei einem gegenüber Atmosphärendruck erhöhten Ausgangsdruck und bei einer Temperatur von mindestens etwa 25 °C mit dem flüssigem Ammoniak in Kontakt gebracht, wobei vorzugsweise der Druck anschließend auf Atmosphärendruck reduziert wird.

Das erfindungsgemäße Verfahren unter explosionsartiger Volumenvergrößerung kann diskontinuierlich oder kontinuierlich erfolgen. Bei diskontinuierlicher Verfahrensführung weist die Apparatur im wesentlichen einen Druckbehälter, der mit dem zu behandelnden Gut befüllt werden kann, und einen über ein Ventil daran angeschlossenen Auffang- bzw. Expansionsbehälter auf. Es gilt hierbei zu beachten, daß das Ventil im geöffneten Zustand eine große lichte Öffnung aufweist, damit sich beim Explosionsvorgang das Polysaccharidmaterial nicht staut und nicht lediglich Ammoniak entweicht. Der Expansionsbehälter weist gegenüber dem Druckbehälter ein vielfaches Volumen auf; beispielsweise beträgt das Volumen des Druckbehälters 1 und das Volumen des Expansionsbehälters 301. Der Druckbehälter ist mit einer Zufuhrleitung für Ammoniak, gegebenenfalls unter Zwischenschaltung einer druckerhöhenden Vorrichtung, verbunden. Zur weiteren Druckerhöhung kann außerdem eine Zufuhrleitung für Inertgase, z.B. Stickstoff, vorgesehen sein.

In kontinuierlicher Weise könnte das Verfahren unter Heranziehen eines rohr- oder zylinderförmigen, druckfesten Reaktors durchgeführt werden, bei dem das Inkontaktbringen von Polysaccharid, Inklusionsmittel und flüssigem Ammoniak im Zylinder des Reaktors stattfindet und das imprägnierte Material mit Hilfe einer Förderschnecke als Pfropfen durch den Reaktor transportiert wird und intermittierend durch ein Ventil oder ein geeignetes System von Druckschleusen in einen Aurfangraum ausgetragen wird. Geeignete Komponenten, die der Fachmann ohne weiteres zur Durchführung des erfindungsgemäßen Verfahrens adaptieren kann, sind in der EP-A-329 173 bzw. der US-4 211 163 beschrieben.

Nach der Überführung des Systems Polysaccharid/Inklusionsmittel/flüssiges Ammoniak in den Explosionsraum wird das gasförmige Ammoniak aus diesem abgezogen, vorzugsweise zu flüssigem Ammoniak kondensiert und dann wieder in den Verfahrensablauf recyclisiert.

Um die mit der Erfindung verbundenen Vorteile voll auszuschöpfen, wird das Verfahrenserzeugnis zur Entfernung anhaftenden Ammoniaks vorzugsweise unter Vakuum gesetzt und/oder ausgeheizt. Es ist bevorzugt, daß das Ammoniak bis auf einen Restgehalt von weniger als 0,02 % entfernt wird. Der Restgehalt an Wasser kann ohne weiteres auf unter 1 Masse-% verringert werden.

Mit der Erfindung sind folgende Vorteile verbunden: Die Inklusionsmittel können ohne zusätzlichen Aurwand, d.h. ohne eine der Ammoniakbehandlung nachgeschaltete Reaktion mit dem Polysaccharid durchführen zu müssen, mit dem flüssigen Ammoniak eingeführt werden. Das Ammoniak kann anschließend durch geeignete Maßnahmen vollständig, aber unter Erhalt der Aktivität aus dem Verfahrensprodukt entfernt werden. Es wird eine Stabilisierung des aktivierten Zustands nach der Ammoniakbehandlung erreicht, die eine anschließende Trocknung und Lagerung sowie einen Transport gestattet, ohne daß die Akzessibilität und Reaktivität beeinträchtigt werden. Bei Verwendung von reaktiven Spacern als Inklusionsmittel wird ein schwach substituiertes Polysaccharidderivat erhalten, das seinerseits sehr gut zugänglich und reaktiv ist sowie gegebenenfalls eine anschließende Trocknung und Lagerung sowie einen Transport gestattet. Es wird ein Verfahrensprodukt bereitgestellt, das nach Entfernung des Ammoniaks in sauer katalysierten Reaktionen die Wirkung des Katalysators nicht mindert und somit den Reaktionsverlauf und die Produktqualität nicht beeinträchtigt bzw. in Reaktionen, die unter Verwendung von Reagenzien ablaufen, die mit Ammoniak in Reaktion treten, nicht zu Nebenreaktionen Veranlassung gibt. Das Verfahrensprodukt ist ein aktiviertes Polysaccharid, das bereits mit dem Ammoniak zugegebene Lösemittel, Quellmittel, Phasenvermittler und/oder Reaktionshilfsmittel enthält, die die weiteren Verarbeitungsschritte - seien es Lösevorgänge ohne Derivatisierung oder die Herstellung von Cellulosederivaten - aktiv unterstützen. Derivatisierungsreaktionen können unter starker Scherung mit wesentlich geringerem Fest/flüssig-Verhältnis durchgeführt werden. Die durch den Ammoniak bewirkte gleichmäßige Verteilung dieser Stoffe erlaubt infolge stark erleichterter Diffusion bei anschließenden Derivatisierungen kürzere Reaktionszeiten.

Die Erfindung wird durch die folgenden Beispiele näher veranschaulicht.

### Beispiel 1 (Vergleichsbeispiel): Dieses Beispiel erläutert die Acetylierung eines nach der Ammoniakexplosion durch Trocknung vom Ammoniak befreiten Zellstoffes.

120 g handelsüblicher Chemiezellstoff mit einem Gehalt an α-Cellulose von etwa 96 % wurde in kleine Stücke zerrissen und in einen Autoklaven eines Volumens von 1 1 mit einer Doppelwand zur Dampfbeheizung gegeben. Anschließend wurden 300 g flüssiges Ammoniak über ein Ventil in den Autoklaven eingepreßt. Durch die Dampfbeheizung wurde der Autoklaveninhalt auf 60 °C aufgeheizt, wobei sich im Autoklaven ein Druck von 20 bar einstellte. Nach 60 s wurde der Autoklaveninhalt schlagartig durch Öffnen eines Kugelventils mit einem lichten Durchmesser von 40 mm in einen Auffangbehälter entspannt.

Nach der Explosion wird der noch ammoniakhaltige Zellstoff aus dem Auffangbehälter entnommen. Es werden anschließend drei Proben von je 10 g gezogen und bei Raumtemperatur, bei 40 °C und bei 80 °C im Vakuum fiir 2 Stunden getrocknet, um den Ammoniak zu entfernen. An den getrockneten Proben werden Acetylierungstests vorgenommen. Dazu werden jeweils 5 g getrockneter Zellstoff eingewogen, dazu werden 50 ml Eisessig sowie 25 ml Aktivierungssäure ( Eisessig, der 0,5 ml konz.

Schwefelsäure enthält) gegeben. Diese Ansätze werden für 2 Stunden auf einer Rollbank gerollt. Sodann läßt man für 15 Minuten in einem Rührbecher temperieren, gibt dann 25 ml Essigsäureanhydrid zu und startet auf diese Weise die Acetyliernngsreaktion, wobei zunächst für 5 Minuten bei 150 U/min. und anschließend bei 500 U/min. gerührt wird.

Es wurde in allen drei Fällen auch nach 60 Minuten Reaktionsdauer kaum lösliches Celluloseacetat gebildet, die faserige Struktur der Cellulose blieb überwiegend erhalten. Dies deutet auf eine sehr stark eingeschränkte Zugänglichkeit und schlechte Reaktivität hin.

### Beispiel 2: Dieses Beispiel erläutert die erfindungsgemäße Aktivierung unter Zusatz von Ethylencarbonat.

In einen druckfesten Behälter (Rührautoklav eines Volumen von etwa 700 cm³) aus Edelstahl, der mit einem Rührfisch bestückt ist, werden 65 g Ethylencarbonat gegeben. Dann wird der Rührautoklav mit einem Deckel, in dem sich ein Sichtfenster befindet, durch Verschrauben druckfest verschlossen. Ein über eine Druckleitung mit Absperrventil mit dem Rührautoklaven verbundener Reaktionsautoklav wird nun mit 120 g handelsüblichem Chemiezellstoff (α-Cellulosegehalt ca. 96%, Wassergehalt 8%) in Blattform, der vorher in ca. 1x1 cm große Stückchen gerissen worden war, befüllt. Der Reaktionsautoklav weist ein Volumen von ca. 1 1 auf und ist mit einer Doppelwand zur Beheizung mit Dampf versehen.

Nun werden aus einer handelsüblichen Stahlflasche, ausgestattet mit einem Steigrohr zur Entnahme von flüssigem Ammoniak, durch Öffnen eines Absperrventils zwischen der Stahlflasche und dem Rührautoklaven 300 g flüssiges Ammoniak in den Rührautoklaven eindosiert, das bei Umgebungsbedingungen unter einem Druck von 7 bar steht. Dann wird das Ventil wieder geschlossen. Ein weiteres Absperrventil zwischen dem Rührautoklaven und dem Reaktionsautoklaven ist noch geschlossen. Gleichzeitig wird der Magnetrührer, der zum Antrieb des im Rührautoklaven befindlichen Rührfisches von außen dient, angeschaltet. Visuell läßt sich verfolgen, daß sich das Ethylencarbonat im flüssigen Ammoniak schnell auflöst.

Nach Abschluß der Auflösung des Ethylencarbonates im flüssigen Ammoniak wird diese Lösung durch Öffnen des Absperrventils zwischen Rühr- und Reaktionsautoklav in letzteren infolge des herrschenden Überdruckes gepreßt. Wenn sich die ganze Lösung im Reaktionsautoklaven befindet, wird dieses Ventil geschlossen. Durch die zusätzliche Dampfheizung am Reaktionsautoklaven wird die Temperatur im Inneren auf 70°C angehoben. Hierbei stellte sich innerhalb des Autoklaven ein Druck von 20 bar ein. Das System wurde 60 s unter diesen Bedingungen gehalten. Anschließend wurde es durch Öffnen eines Kugelventils (Durchmesser der Öffnung : 4 cm) schlagartig und gänzlich in einen Explosionsbehälter eines Volumens von 300 1 entspannt.

Der das Ethylencarbonat und noch Ammoniak enthaltende Zellstoff wurde aus dem Explosionsbehälter in einen Trockenofen überführt. Darin wurde bei 80 °C im Vakuum der Ammoniak aus dem Zellstoff entfernt. Der trockene das Ethylencarbonat enthaltende Zellstoff wurde anschließend dem gleichen, wie in Beispiel 1 bereits näher beschriebenen, Acetylierungstest unterworfen. Trotz der vorangegangenen scharfen Trocknung reagierte der mit dem Ethylencarbonat versetzte Zellstoff in nur 4 Minuten unter Klarwerden der Reaktionsmischung. Dies deutet auf eine hervorragende Zugänglichkeit und Reaktivität hin. Zum Vergleich ist anzuführen, daß die Zeit bis zum Klarwerden der Reaktionsmischung bei der Acetylierung von unbehandelten Zellstoffen mindestens 50 Minuten beträgt.

## Patentansprüche

1. Verfahren zur Aktivierung eines Polysaccharids durch Inkontaktbringen des Polysaccharids mit flüssigem Ammoniak, **dadurch gekennzeichnet, daß** das Polysaccharid in Gegenwart eines in flüssigem Ammoniak löslichen oder dispergierbaren Inklusionsmittels mit dem flüssigen Ammoniak in Kontakt gebracht und das dem System Polysaccharid/Inklusionsmittel/flüssiges Ammoniak zur Verfügung stehende Volumen unter Senken des Drucks um mindestens 5 bar explosionsartig vergrößert wird, mit der Maßgabe daß das Inklusionsmittel nicht Harnstoff sein kann, wenn das Polysaccharid Cellulose ist.

2. Verfahren nach Anspruch 1, **dadurch gekennzeichnet, daß** das Polysaccharid bei einem gegenüber Atmosphärendruck erhöhten Ausgangsdruck und bei einer Temperatur von mindestens etwa 25 °C mit dem flüssigem Ammoniak in Kontakt gebracht wird.

3. Verfahren nach Anspruch 2, **dadurch gekennzeichnet, daß** der Druck anschließend auf Atmosphärendruck reduziert wird.

4. Verfahren nach Anspruch 3, **dadurch gekennzeichnet, daß** die explosionsartige Volumenvergrößerung innerhalb einer Zeit von weniger als 1 s durchgeführt wird.

5. Verfahren nach Anspruch 3 oder 4, **dadurch gekennzeichnet, daß** das Polysaccharid, das Inklusionsmittel und das flüssige Ammoniak in einer Druckeinrichtung in Kontakt gebracht werden und das System Polysaccharid/Inklusionsmittel/flüssiges Ammoniak durch Überführen in einen Explosionsraum mit gegenüber der Druckeinrichtung größerem Volumen entspannt wird.

6. Verfahren nach einem der Ansprüche 2 bis 5, **dadurch gekennzeichnet, daß** der Ausgangsdruck zwischen etwa 5 und 46 bar, insbesondere zwischen etwa 25 und 30 bar, eingestellt wird.

7. Verfahren nach einem der Ansprüche 2 bis 6, **dadurch gekennzeichnet, daß** die Temperatur vor der Reduzierung des Drucks zwischen etwa 25 und 85 °C, insbesondere zwischen etwa 55 und 65 °C, eingestellt wird.

8. Verfahren nach einem der Ansprüche 4 bis 7, **dadurch gekennzeichnet, daß** der Ausgangsdruck explosionsartig um mindestens etwa 10 bar, insbesondere etwa 30 bar, gesenkt wird.

9. Verfahren nach einem der vorstehenden Ansprüche, **dadurch gekennzeichnet, daß** das Verfahrenserzeugnis zur Entfernung anhaftenden Ammoniaks unter Vakuum gesetzt und/oder ausgeheizt wird.

10. Verfahren nach Anspruch 9, **dadurch gekennzeichnet, daß** das Ammoniak bis auf einen Restgehalt von weniger als 0,02 % entfernt wird.

11. Verfahren nach einem der vorstehenden Ansprüche, **dadurch gekennzeichnet, daß** auf 1 Masse-Teil Polysaccharid mindestens 0,25 Masse-Teile, insbesondere etwa 1 bis 5 Masse-Teile, flüssiges Ammoniak eingesetzt werden.

12. Verfahren nach einem der vorstehenden Ansprüche, **dadurch gekennzeichnet, daß** das molare Verhältnis von Inklusionsmittel zu Anhydroglucoseeinheiten des Polysaccharids weniger als etwa 1:50, insbesondere etwa 1:20 bis 1:5 beträgt.

13. Verfahren nach einem der vorstehenden Ansprüche, **dadurch gekennzeichnet, daß** das Polysaccharid Cellulose ist.

14. Verfahren nach Anspruch 13, **dadurch gekennzeichnet, daß** als Cellulose Zellstoff mit einem Gehalt an α-Cellulose von mindestens 92 Masse-% verwendet wird.

15. Verfahren nach einem der vorstehenden Ansprüche, **dadurch gekennzeichnet, daß** das Inklusionsmittel ein Molekulargewicht von etwa 60 bis 50 000 g/mol aufweist.

16. Verfahren nach einem der vorstehenden Ansprüche, **dadurch gekennzeichnet, daß** das Inklusionsmittel ein einwertiger Alkohol, ein mehrwertiger Alkohol, ein Phenol, ein Ether, ein Acetal, ein Keton, ein β-Ketoester, ein Carbonsäureamid, ein Sulfonsäureamid, ein Carbonsäureester, ein Harnstoffderivat, eine Aminosäure, ein Steroid, ein Mono-, Di- oder Oligosaccharid und/oder eine heteroaromatische Verbindung ist.

17. Verfahren nach einem der Ansprüche 1 bis 15, **dadurch gekennzeichnet, daß** das Inklusionsmittel ein aprotisches Lösungsmittel mit einem Siedepunkt bei Atmosphärendruck von mindestens 50°C ist.

18. Verfahren nach einem der Ansprüche 1 bis 15, **dadurch gekennzeichnet, daß** das Inklusionsmittel ein Polymer ist.

19. Verfahren nach einem der Ansprüche 1 bis 15, **dadurch gekennzeichnet, daß** das Inklusionsmittel ein reaktiver Spacer ist.

20. Verfahren nach einem der Ansprüche 1 bis 15, **dadurch gekennzeichnet, daß** das Inklusionsmittel ein Lösemittel, Quellmittel, Phasenvermittler und/oder Reaktionshilfsmittel ist.

## Claims

1. A method of activating a polysaccharide by bringing it into contact with liquid ammonia, **characterised in that** the polysaccharide is brought into contact with liquid ammonia in the presence of an inclusion agent soluble or dispersible in liquid ammonia and the space available for the system comprising polysaccharide, inclusion agent and liquid ammonia is explosively increased by lowering the pressure by at least 5 bar, subject to the proviso that the inclusion agent cannot be urea if the polysaccharide is cellulose.

2. A method according to claim 1, **characterised in that** the polysaccharide is brought into contact with the liquid ammonia at a starting pressure above atmospheric pressure and at a temperature of at least about 25°C.

3. A method according to claim 2, **characterised in that** the pressure is subsequently reduced to atmospheric pressure.

4. A method according to claim 3, **characterised in that** the explosive increase in volume is obtained in less than 1 second.

5. A method according to claim 3 or claim 4, **characterised in that** the polysaccharide, the inclusion agent and the liquid ammonia are brought into contact in a pressure device and the system comprising polysaccharide, inclusion agent and liquid ammonia is relieved of pressure by transferring it into an explosion chamber having a volume greater than the pressure device.

6. A method according to any of claims 2 to 5, **characterised in that** the starting pressure is set at between about 5 and 46 bar, especially between about 25 and 30 bar.

7. A method according to any of claims 2 to 6, **characterised in that** before the reduction in pressure, the temperature is set between about 25 and 85°C, especially between about 55 and 65°C.

8. A method according to any of claims 4 to 7, **characterised in that** the starting pressure is explosively lowered by at least about 10 bar, more especially about 30 bar.

9. A method according to any of the preceding claims, **characterised in that** the product of the process is placed and/or heated in vacuo to remove adhering ammonia.

10. A method according to claim 9, **characterised in that** the ammonia is removed until the residual content is less than 0.02%.

11. A method according to any of the preceding claims, **characterised in that** at least 0.25 parts by weight, especially about 1 to 5 parts by weight of liquid ammonia are used per 1 part by weight of polysaccharide.

12. A method according to any of the preceding claims, **characterised in that** the molar ratio of inclusion agent to anhydroglucose units of the polysaccharide is less than about 1:50, especially about 1:20 to 1:5.

13. A method according to any of the preceding claims, **characterised in that** the polysaccharide is cellulose.

14. A method according to claim 13, **characterised in that** the cellulose used contains at least 92% by weight of α-cellulose.

15. A method according to any of the preceding claims, **characterised in that** the inclusion agent has a molecular weight of about 60 to 50,000 g/mol.

16. A method according to any of the preceding claims, **characterised in that** the inclusion agent is a monohydric alcohol, a polyhydric alcohol, a phenol, an ether, an acetal, a ketone, a β-ketoester, a carboxylic acid amide, a sulphonic acid amide, a carboxylic acid ester, a urea derivative, an amino acid, a steroid, a mono-, di- or oligosaccharide and/or a hetero-aromatic compound.

17. A method according to any of claims 1 to 15, **characterised in that** the inclusion agent is an aprotic solvent with a boiling point of at least 50°C at atmospheric pressure.

18. A method according to any of claims 1 to 15, **characterised in that** the inclusion agent is a polymer.

19. A method according to any of claims 1 to 15, **characterised in that** the inclusion agent is a reactive spacer.

20. A method according to any of claims 1 to 15, **characterised in that** the inclusion agent is a solvent, a swelling agent, a phase mediator and/or a reaction adjuvant.

## Revendications

1. Procédé d'activation d'un polysaccharide par mise en contact du polysaccharide avec de l'ammoniac liquide, **caractérisé en ce que** le polysaccharide est mis en contact avec l'ammoniac liquide en présence d'un agent d'inclusion soluble ou dispersible dans l'ammoniac liquide et le volume à disposition du système polysaccharide/agent d'inclusion/ammoniac liquide est agrandi de manière explosive par abaissement de la pression d'au moins 5 bars, sous réserve que l'agent d'inclusion ne puisse pas être l'urée lorsque le polysaccharide est la cellulose.

2. Procédé suivant la revendication 1, **caractérisé en ce que** le polysaccharide est mis en contact avec l'ammoniac liquide à une pression de départ élevée par rapport à la pression atmosphérique et à une température d'au moins environ 25°C.

3. Procédé suivant la revendication 2, **caractérisé en ce que** la pression est ensuite réduite à la pression atmosphérique.

4. Procédé suivant la revendication 3, **caractérisé en ce que** l'agrandissement du volume à la manière d'une explosion est effectué en un laps de temps inférieur à une seconde.

5. Procédé suivant la revendication 3 ou 4, **caractérisé en ce que** le polysaccharide, l'agent d'inclusion et l'ammoniac liquide sont mis en contact dans un dispositif résistant à la pression et le système polysaccharide/agent d'inclusion/ammoniac liquide est détendu par transfert dans une chambre d'explosion de volume supérieur à celui du dispositif résistant à la pression.

6. Procédé suivant l'une des revendications 2 à 5, **caractérisé en ce que** la pression initiale est réglée entre environ 5 et 46 bars, notamment entre environ 25 et 30 bars.

7. Procédé suivant l'une des revendications 2 à 6, **caractérisé en ce que** la température, avant la réduction de la pression, est réglée entre environ 25 et 85°C, notamment entre environ 55 et 65°C.

8. Procédé suivant l'une des revendications 4 à 7, **caractérisé en ce que** la pression initiale est abaissée par explosion d'au moins environ 10 bars, notamment d'environ 30 bars.

9. Procédé suivant l'une des revendications précédentes, **caractérisé en ce que** le produit du procédé est mis sous vide et/ou chauffé pour éliminer l'ammoniac retenu.

10. Procédé suivant la revendication 9, **caractérisé en ce que** l'ammoniac est éliminé jusqu'à une teneur résiduelle inférieure à 0,02 %.

11. Procédé suivant l'une des revendications précédentes, **caractérisé en ce que** l'ammoniac liquide est utilisé en proportion d'au moins 0,25 partie en masse, notamment d'environ 1 à 5 parties en masse, pour une partie en masse de polysaccharide.

12. Procédé suivant l'une des revendications précédentes, **caractérisé en ce que** le rapport molaire de l'agent d'inclusion aux unités d'anhydroglucose du polysaccharide s'élève à une valeur de moins d'environ 1:50, en particulier d'environ 1:20 à 1:5.

13. Procédé suivant l'une des revendications précédentes, **caractérisé en ce que** le polysaccharide est la cellulose.

14. Procédé suivant la revendication 13, **caractérisé en ce que** la cellulose utilisée est une cellulose de bois ayant une teneur en α-cellulose d'au moins 92 % en masse.

15. Procédé suivant l'une des revendications précédentes, **caractérisé en ce que** l'agent d'inclusion a un poids moléculaire d'environ 60 à 50 000 g/mole.

16. Procédé suivant l'une des revendications précédentes, **caractérisé en ce que** l'agent d'inclusion est un alcool monovalent, un alcool polyvalent, un phénol, un éther, un acétal, une cétone, un β-céto-ester, un amide d'acide carboxylique, un amide d'acide sulfonique, un ester d'acide carboxylique, un dérivé d'urée, un amino-acide, un stéroïde, un mono-, di- ou oligosaccharide et/ou un composé hétéroaromatique.

17. Procédé suivant l'une des revendications 1 à 15, **caractérisé en ce que** l'agent d'inclusion est un solvant aprotique ayant un point d'ébullition à la pression atmosphérique d'au moins 50°C.

18. Procédé suivant l'une des revendications 1 à 15, **caractérisé en ce que** l'agent d'inclusion est un polymère.

19. Procédé suivant l'une des revendications 1 à 15, **caractérisé en ce que** l'agent d'inclusion est un espaceur réactif.

20. Procédé suivant l'une des revendications 1 à 15, **caractérisé en ce que** l'agent d'inclusion est un solvant, un agent gonflant, un médiateur de phase et/ou un auxiliaire de réaction.
